Europäisches Patentamt

European Patent Office

Office européen des brevets

⑩

(11) Publication number: **0 087 314**
**B1**

(12) **EUROPEAN PATENT SPECIFICATION**

(45) Date of publication of patent specification: **19.04.89**

(21) Application number: **83300907.9**

(22) Date of filing: **22.02.83**

(51) Int. Cl.⁴: **G 06 F 11/26**

(54) Diagnostic system in a data processor.

(30) Priority: **24.02.82 JP 28642/82**

(43) Date of publication of application:
**31.08.83 Bulletin 83/35**

(45) Publication of the grant of the patent:
**19.04.89 Bulletin 89/16**

(84) Designated Contracting States:
**DE FR GB**

(56) References cited:
**EP-A-0 012 017**
**US-A-4 183 461**

(73) Proprietor: **FUJITSU LIMITED**
**1015, Kamikodanaka Nakahara-ku**
**Kawasaki-shi Kanagawa 211 (JP)**

(72) Inventor: **Shioya, Katsuhiko c/o Fujitsu Ltd.**
**Patent Dpt.**
**No. 1015 Kamikodanaka Nakahara-ku**
**Kawasaki (JP)**
Inventor: **Ifuku, Tetsuhiko c/o Fujitsu Ltd.**
**Patent Dpt.**
**No. 1015 Kamikodanaka Nakahara-ku**
**Kawasaki (JP)**
Inventor: **Inamasu, Seiichi c/o Fujitsu Ltd.**
**Patent Dpt.**
**No. 1015 Kamikodanaka Nakahara-ku**
**Kawasaki (JP)**

(74) Representative: **Sunderland, James Harry et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to a diagnostic system in a data processor constructed so that during its normal operation the output of a memory is input directly to a combinational circuit, such as an arithmetic unit or the like, and the output of the combinational circuit is input directly to the memory.

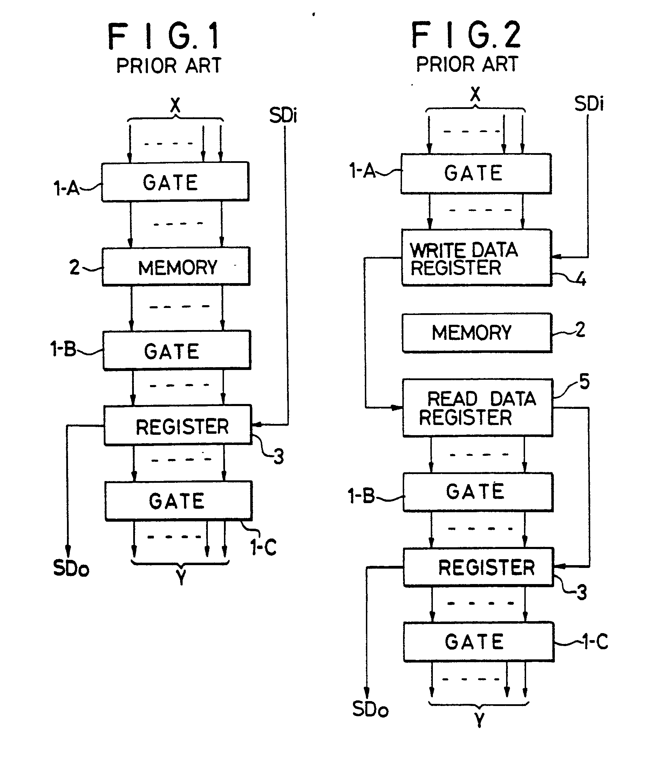

Fig. 1 is a block diagram showing the principles of a conventional logical unit. Reference numerals 1-A to 1-C indicate gates; 2 designates a memory; 3 identifies a register; SDi denotes scan-in data; SDo represents scan-out data; X shows input data to the gate 1-A; and Y refers to output data from the gate 1-C. Incidentally, the gates 1-A to 1-C are not mere gates but are combinational circuits, such as arithmetic circuits or the like. The combinational circuit is diagnosed by checking its input and output data.

The output data from the gate 1-A is input directly to the memory 2 and the input data to the gate 1-B is data read out directly from the memory 2. In general, however, a scan function for the memory 2 is not provided; therefore, in the arrangement of Fig. 1, the gates 1-A and 1-B cannot be diagnosed individually.

Fig. 2 is a block diagram showing the principles of another conventional logical unit which is provided with a write data register 4 and a read data register 5 in addition to the arrangement of Fig. 1. In the case of diagnosing the gate 1-A, the input data X is provided thereto and its output is set in the write data register 4, after which data of the write data register 4 is read out therefrom by a serial scan operation. In the case of diagnosing the gate 1-B, data is written by a serial scan operation into the read data register 5 and its output data is input to the gate 1-B, the output data of which is set in the register 3. Then the data of the register 3 is read out therefrom by the serial scan operation. In this way, the gates 1-A and 1-B can be diagnosed. The write data register 4 and the read data register 5 are used during the diagnosis only and during normal operation, for speeding up the operation of the logical unit, they are by-passed so that the output data of the gate 1-A is input directly to the memory 2 and the read data of the memory 2 is input directly to the gate 1-B.

Since the provision of the registers which are used solely for diagnosis increases the amount of hardware used, it has been proposed to employ existing registers as the aforesaid read and write data registers 4 and 5.

In the absence of a scan function for a memory, if an instruction for reference to the memory, for instance, an instruction for adding data of first and second memories and storing the added data in the first memory, (MEM 1)←(MEM 1)+(MEM 2), is provided in an instruction register, the diagnostic results cannot be taken out to the outside. Therefore, when an instruction of the memory reference format is given, no diagnosis is possible. Accordingly, a high proportion of memory reference instructions is a serious obstacle to diagnosis.

EP—A—12 017 discloses a programmable computer comprising means for checking its error correcting circuits. A memory of the computer has, in addition to its memory array, a memory-internal data register including the error correcting circuits and a memory-internal holding register holding digits which have been read from or are about to be written into the memory array, together with the relevant error code check digits. In a maintenance mode, a read or write instruction is caused to read from or write into the holding register instead of reading from or writing into the appropriate location in the memory array. This enables software testing of the error correcting circuits without reliance upon use of the memory array in the testing process. The computer has a CPU.

US—A—4 183 461 discloses an arrangement in which the memory elements (flip-flop circuits) of a control circuit of an electronic computer are connected in the form of a loop at a time of fault diagnosis, which loop has its contents shifted bit by bit in response to clock pulses from a fault-diagnosing unit.

According to the present invention there is provided a data processor including a combinational circuit, an internal memory, for storing various data, and a plurality of internal registers, the data processor having a diagnostic system such that during a diagnostic operation one of the registers is used in place of the internal memory when executing an instruction referring to the internal memory, characterised in that

the said registers are working registers of the data processor separate from the internal memory and in that

the diagnostic system is operable to effect a diagnosis operation to check the functioning of the combinational circuit,

the said one register being arranged so that a test pattern can be set therein, or read therefrom, during such diagnostic operation for checking the functioning of the combinational circuit.

The present invention provides a diagnostic system which permits a diagnosis of a combinational circuit through using an internal register when a memory reference instruction is given during diagnosis.

Reference is made, by way of example, to the accompanying drawings, in which:—

Figs. 1 and 2 are block diagrams showing the principles of conventional logical units, as mentioned above;

Fig. 3 is a block diagram illustrating an embodiment of the present invention;

Fig. 4 is a block diagram illustrating the principal part of the embodiment of the present invention;

Fig. 5 s a flowchart of a diagnostic operation of the embodiment of the present invention; and

Fig. 6 is a timing chart of the diagnostic operation.

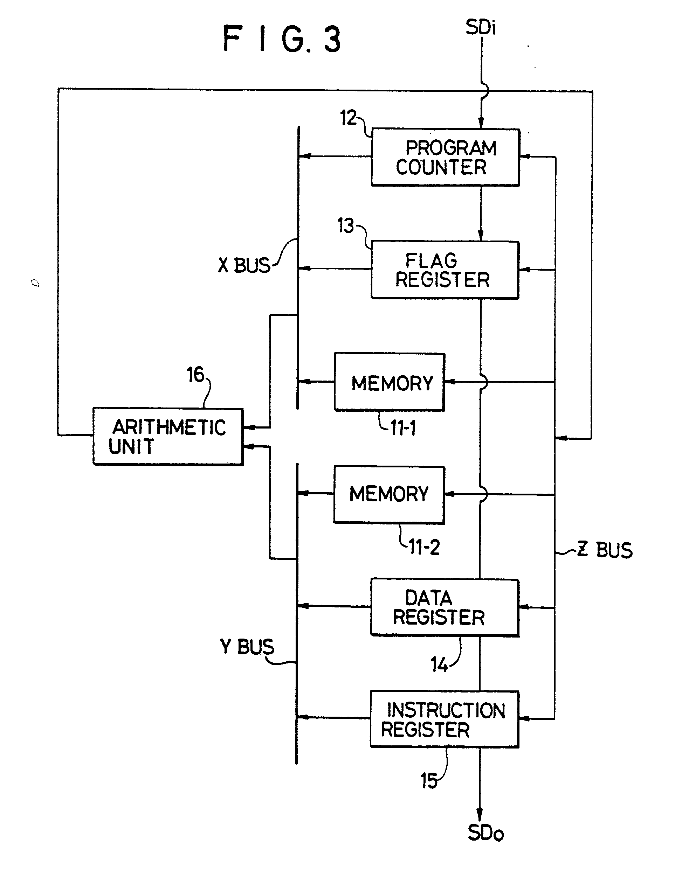

Fig. 3 illustrates in block form an embodiment of the present invention. Reference numerals 11-1 and 11-2 indicate internal memories; 12 designates a program counter; 13 identifies a flag register; 14 denotes a data register; 15 represents an instruction register; 16 shows an arithmetic unit; SDi refers to scan-in data; and SDo signifies scan-out data. Incidentally, the arithmetic unit 16 corresponds to the gate 1-A or 1-B in Figs. 1 and 2. The registers 12, 13 and 14 which are internal registers are interconnected by a scan chain. In this case, it is also possible to arrange only one internal register so that it can be scanned in and scanned out.

During normal operation the content of the program counter 12 is provided as an address signal to an external storage (not shown). From the external storage is provided on a Z bus data read out in accordance with the address signal. When the data on the Z bus is an instruction word, it is set in the instruction register 15, whereas, when the data is operand data, it is set in the data register 14.

In the case where an instruction decoded by the instruction register 15 is

$$(MEM\ 1) \leftarrow (MEM\ 1) + (DR),$$

that is, an arithmetic instruction that adds the contents of the memory 11-1 and the data register 14 and sets the added data in the memory 11-1, the contents of the memory 11-1 and the data register 14 are input into the arithmetic unit 16 via X and Y buses, respectively. The arithmetic results of the arithmetic unit 16 are written in the memory 11-1 via the Z bus. Further, each bit of the flag register 13 is set according to the arithmetic results.

A description will be given of the case where the internal registers used in place of the internal memories during diagnosis are the flag register 13 and the data register 14.

Select signals and write enable signals for the flag register 13, the data register 14 and the memories 11-1 and 11-2 are expressed by the following expressions:

For the memories:
$$MSL = MSL' \cdot \overline{TM}$$
$$MWE = MWE' \cdot \overline{TM}$$

For the registers:
$$RSL = RSL + TM \cdot MSL'$$
$$RWE = RWE + TM \cdot MWE'$$

where MSL is a memory select signal, MSL' an original memory select signal, TM a test mode signal, MWE a memory write enable signal, MWE' an original memory write enable signal, RSL a register select signal, and RWE a register write enable signal.

During diagnosis TM="1" and request signals to the memories are all inhibited but instead request signals to the flag register 13 and the data register 14 which are used as substitutes for the memories are valid. During diagnosis a test pattern is set by a scan operation for each register. In the event that an arithmetic instruction,

$$(MEM\ 1) \leftarrow (MEM\ 1) + (MEM\ 2),$$

is set in the instruction register 15 for making a diagnosis of the arithmetic unit 16, a system clock is generated in the state of TM="1" for several cycles after the scan-in operation, executing the arithmetic instruction. At this time, since TM="1", the contents of the flag register 13 and the data register 14 are input via the X and Y buses to the arithmetic unit 16 and the arithmetic results are set in the flag register 13. After execution of the arithmetic instruction, the scan operation is performed again and the arithmetic results set in the flag register 13 are output as the scan-out data SDo to the outside, by which the arithmetic unit 16 can be diagnosed.

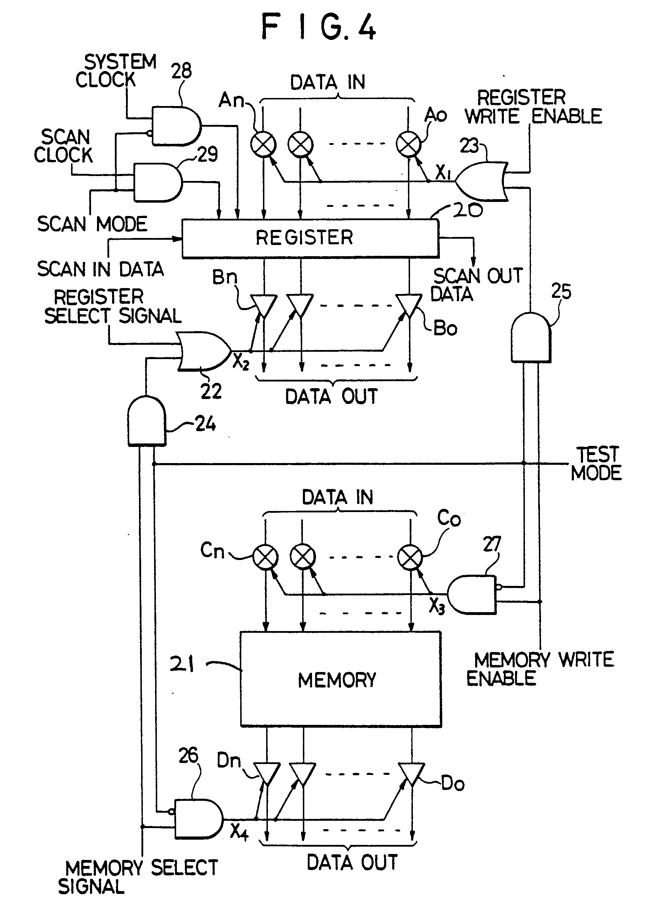

Fig. 4 is a block diagram illustrating the principal part of the embodiment of the present invention. Reference numeral 20 indicates a register (corresponding to the flag register 13 or data register 14 in Fig. 3); 21 designates a memory (corresponding to the memory 11-1 or 11-2 in Fig. 3); 22 and 23 identify OR circuits; 24 to 29 denote AND circuits; and $A_0$ to $A_n$, $B_0$ to $B_n$, $C_0$ to $C_n$ and $D_0$ to $D_n$ represent gate groups, respectively. As the gates $B_0$ to $B_n$ and $D_0$ to $D_n$, tristate gates are used for preventing a bus fight on the X and Y buses.

Input data from the Z bus (see Fig. 3) to the register 20 is controlled by the gates $A_0$ to $A_n$ and output data from the register 20 to the X or Y bus (see Fig. 3) is controlled by the gates $B_0$ to $B_n$. A control signal $X_1$ for the gates $A_0$ to $A_n$ is made valid when the register write enable signal or the memory write enable signal in a test mode becomes valid.

A control signal $X_2$ for the gates $B_0$ to $B_n$ is made valid when the register select signal or the memory select signal in the test mode becomes valid. Input data to the memory 21 is gated by the gates $C_0$ to $C_n$ and output data from the memory 21 is gated by the gates $D_0$ to $D_n$. A control signal $X_3$ for the gates $C_0$ to $C_n$ is made valid by the memory write enable signal except in the test mode. A control signal $X_4$ for the gates $D_0$ to $D_n$ is made valid when the memory select signal except in the test mode becomes valid.

When the system is in its normal operative state, the test mode signal is a "0", so that only the register write enable signal and the register select signal become valid for the register 20. And, if the scan mode signal happens to be a "0", the system clock is applied to the register 20 and when the register write enable signal is applied, the input data is set is the register 20. When the scan mode signal happens to be a "1", the scan clock is provided to the register 20 and the scan-in data SDi is scanned in the register 20 and, at the same time, the scan-out data SDo is output therefrom. For the memory 21, too, the memory write enable signal and the memory select signal become valid. Consequently, the register 20 and the memory 21 are able to perform normal operation.

When the test mode signal is made a "1" to put the system in the diagnostic state, the memory write enable signal becomes the control signal $X_1$ for the gates $A_0$ to $A_n$, whereas the memory select signal becomes the control signal $X_2$ for the gates $B_0$ to $B_n$. Since the AND circuits 26 and 27 are closed, the control signals $X_3$ and $X_4$ for the gates $C_0$ to $C_n$ and $D_0$ to $D_n$ both go to "0s" and the memory 21 is separated by the gates $C_0$ to $C_n$ and $D_0$ to $D_n$. In consequence, when a memory write instruction is executed, write data is set in the register 20 and when a memory read instruction is executed, the content of the register 20 is output.

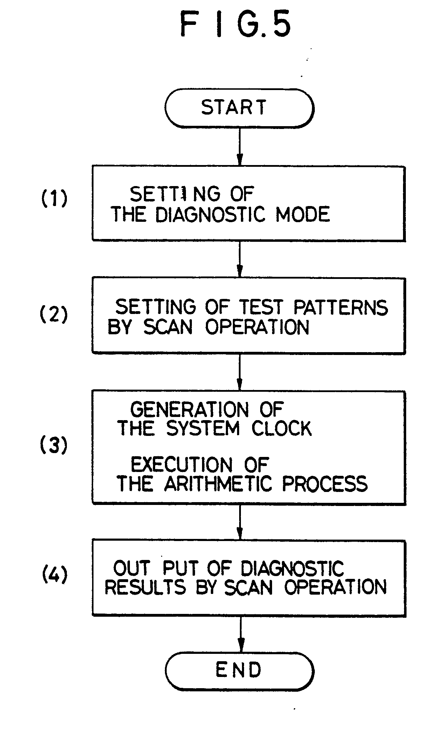

Fig. 5 is a flowchart of the diagnostic operation, showing steps (1) to (4).

(1) The system is put in a diagnostic mode of operation, in this case, the test mode signal is made a "1".

(2) A test pattern is set by the scan operation. At this time, the test mode signal and the scan mode signal both go to "1s".

(3) The system clock is generated to execute arithmetic processing. At this time, the test mode signal goes to a "1" and the scan mode signal goes to a "0".

(4) The diagnostic results are output by the scan operation. At this time, the test mode signal goes to a "1" and the scan mode signal goes to a "1".

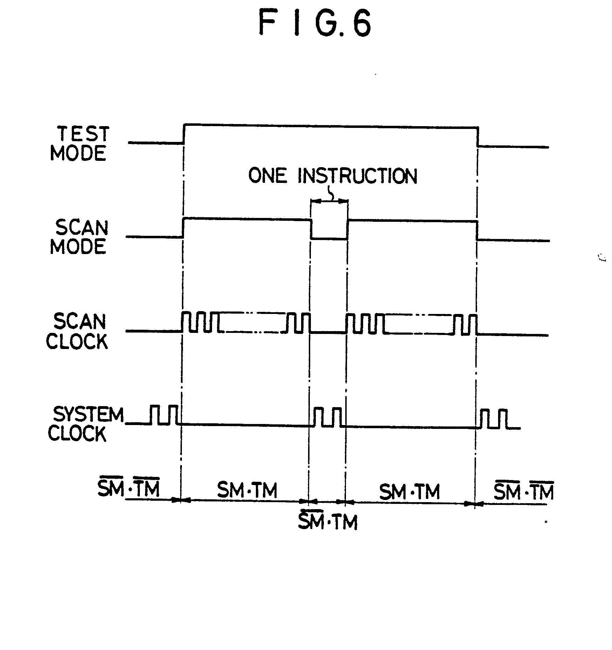

Fig. 6 is a timing chart of the diagnostic operation. A device to be diagnosed assumes the following four states according to the test mode signal TM and the scan mode signal SM.

(a) $\overline{SM} \cdot \overline{TM}$

This is a state of neither the scan operation nor the diagnostic operation. The normal operation takes place.

(b) $SM \cdot \overline{TM}$

This is a state in which the scan operation is performed under the normal operative condition. In this state, the status of a register or a flip-flop in the device can be taken out to the outside, or they can be set to a desired state.

(c) $\overline{SM} \cdot TM$

This is the diagnostic state of the device. At this time, the interior of the device is arranged for diagnosis. In the case where a tri-state bus exists in the device, a control circuit for preventing a bus fight during diagnosis and the diagnostic function for the memory in the device become valid under this condition.

(d) $SM \cdot TM$

The scan in/scan out is performed under the diagnostic condition. That is, a test pattern for diagnosis is set and the diagnostic results are taken out.

In Fig. 6, when the test mode signal TM goes to the "1" state, the system is put in the diagnostic state and when the scan mode signal SM goes to the "1" state, the scan clock is provided to the register 20 to scan in a test pattern. Next, when the scan mode signal goes to the "0" state, the system clock is applied to the register 20 and when the memory select signal is applied, the content of the register 20 is output via the gates $B_0$ to $B_n$ into a combinational circuit, such as an arithmetic unit. When the memory write enable signal is applied, input data (the output data from the combinational circuit, such as an arithmetic unit) is set in the register 20 via the gates $A_0$ to $A_n$. The period during which the scan mode signal remains at the "0" level is the period for execution of one instruction and when the scan mode signal goes to the "1" level again, the scan clock is provided to the register 20, scanning out its content. This scan-out data SDo is taken out to the outside for diagnosing the combinational circuit, such as an arithmetic unit.

As has been described in the foregoing, according to the present invention, there is no need of providing on the input and output sides of a memory registers which are used for diagnosis only, and a combinational circuit, such as an arithmetic unit, which refers to an internal memory can be diagnosed through utilization of internal registers.

It will be apparent that many modifications and variations may be effected without departing from the scope of the novel concepts of the present invention.

**Claims**

1. A data processor including a combinational circuit (16), an internal memory (11-1, 11-2; 21), for storing various data, and a plurality of internal registers (12 to 15; 20), the data processor having a diagnostic system such that during a diagnostic operation one of the registers (13, 14; 20) is used in place of the internal memory (11-1, 11-2; 21) when executing an instruction referring to the internal memory, characterised in that

the said registers (12 to 15; 20) are working registers of the data processor separate from the internal memory (11-1, 11-2; 21) and in that

the diagnostic system is operable to effect a diagnostic operation to check the functioning of the combinational circuit (16),

the said one (13, 14; 21) register being arranged so that a test pattern can be set therein, or read therefrom, during such diagnostic operation for checking the functioning of the combinational circuit.

2. A data processor as claimed in claim 1, wherein two or more of the working registers are serially connected so that, for a diagnostic operation for checking the functioning of the combinational circuit, a test pattern can be serially scanned through the series connection of registers.

3. A system as claimed in claim 1 or 2, wherein the said internal memory (21) has input and output gate groups ($C_0$ to $C_n$, $D_0$ to $D_n$) such that during a diagnostic operation for checking the functioning of the combinational circuit (16) the internal memory (21) will neither accept data for writing therein in response to a memory write enable signal nor read out data therefrom in response to a memory select signal, and wherein the said one register (20) has input and output gate groups ($A_0$ to $A_n$, $B_0$ to $B_n$) such that during diagnosis the register (20) will accept data for writing therein in response to a memory write enable signal, and will read out data therefrom in response to a memory select signal.

4. A data processor as claimed in claim 1, 2 or 3, wherein the working registers (12 to 15) are a program counter (12), a flag register (13), a data register (14) and an instruction register (15).

5. A data processor as claimed in claim 4, wherein the combinational circuit (16) is an arithmetic unit or a logical unit.

## Patentansprüche

1. Datenprozessor mit einer kombinatorischen Schaltung (16), einem internen Speicher (11-1, 11-2; 21) zum Speichern verschiedener Daten, und einer Vielzahl von internen Registern (12 bis 15; 20), welcher Datenprozessor ein Diagnostiksystem hat, so daß während eines Diagnostikbetriebs eines der Register (13, 14; 20) anstelle des internen Speichers (11-1, 11-2; 21) verwendet wird, wenn ein Befehl ausgeführt wird, der den internen Speicher betrifft,

dadurch gekennzeichnet, daß

die genannten Register (12 bis 15; 20) Arbeitsregister des Datenprozessors separat von dem internen Speicher (11-1, 11-2; 21) sind

und daß

das Diagnostiksystem betreibbar ist, um einen Diagnostikbetrieb zu bewirken, um das Funktionieren der kombinatorischen Schaltung (16) zu prüfen,

das genannte eine (13, 14; 21) Register so angeordnet ist, daß ein Testmuster darin gesetzt werden kann, oder aus ihm herausgelesen kann, während solch einer Diagnoseoperation, um das Funktionieren der kombinatorischen Schaltung zu prüfen.

2. Datenprozessor nach Anspruch 1, bei dem zwei oder mehr der Arbeitsregister seriell so verbunden sind, daß für einen Diagnostikbetrieb zum Prüfen des Funktionierens der kombinatorischen Schaltung ein Testmuster seriell durch die Reihenverbindung von Registern durchmustert werden kann.

3. System nach Anspruch 1 oder 2, bei dem der genannte interne Speicher (21) Eingangs- und Ausgangsgategruppen ($C_0$ bis $C_n$, $D_0$ bis $D_n$) hat, so daß während einer Diagnostikoperation zum Prüfen des Funktionierens der kombinatorischen Schaltung (16) der interne Speicher (21) weder Daten zum Einschreiben in ihn in Abhängigkeit von einem Speicherschreibfreigabesignal akzeptiert, noch Daten in Abhängigkeit von einem Speicherauswahlsignal aus ihm ausgelesen werden, und bei dem das genannte eine Register (20) Eingangs- und Ausgangsgategruppen ($A_0$ bis $A_n$, $B_0$ bis $B_n$) hat, so daß während der Diagnose das Register (20) Daten zum Einschreiben in es akzeptiert, in Abhängigkeit von einem Speicherschreibfreigabesignal, und Daten in Abhängigkeit von einem Speicherauswahlsignal aus sich ausliest.

4. Datenprozessor nach Anspruch 1, 2 oder 3, bei dem die Arbeitsregister (12 bis 15) ein Programmzähler (12), ein Kennzeichenregister (13), ein Datenregister (14) und ein Befehlsregister (15) sind.

5. Datenprozessor nach Anspruch 4, bei dem die kombinatorische Schaltung (16) eine arithmetische Einheit oder eine logische Einheit ist.

## Revendications

1. Processeur de données incluant un circuit combinatoire (16), une mémoire interne (11-1, 11-2; 21), pour mémoriser différentes données, et un ensemble de registres internes (12 à 15; 20), le processeur de données comportant un système de diagnostic tel que, pendant une opération de diagnostic, un des registres (13, 14; 20) est utilisé à la place de la mémoire interne (11-1, 11-2; 21) pendant l'exécution d'une instruction se rapportant à la mémoire interne,

caractérisé en ce que

les registres (12 à 15; 20) sont des registres de travail du processeur de données séparés de la mémoire interne (11-1, 11-2; 21) et en ce que

le système de diagnostic peut être mis en fonctionnement pour exécuter une opération de diagnostic afin de contrôler le fonctionnement du circuit combinatoire (16),

ledit registre (13, 14; 21) étant agencé de telle sorte qu'une combinaison de test peut y être placée, ou leu dans celui-ci, pendant l'opération de diagnostic destinée à contrôler le fonctionnement du circuit combinatoire.

2. Processeur de données selon la revendication 1, dans lequel deux registres de travail ou plus sont connectés en série de telle sorte que, pour une opération de diagnostic destinée à contrôler le fonctionnement du circuit combinatoire, une combinaison de test peut être analysée en série par la connexion en série des registres.

3. Système selon l'une quelconque des revendications 1 et 2, dans lequel la mémoire interne (21) comporte des groupes de portes d'entrée et de sortie ($C_0$ à $C_n$, $D_0$ à $D_n$) tels que, pendant une opération de diagnostic destinée à contrôler le fonctionnement du circuit combinatoire (16), la mémoire interne (21) n'acceptera pas de données pour une écriture dans celle-ci en réponse à un signal de validation d'écriture en mémoire ni ne lira de données dans celle-ci en réponse à un signal de sélection de mémoire, et dans lequel ledit registre (20) comporte des groupes de portes d'entrée et de sortie ($A_0$ à $A_n$, $B_0$ à $B_n$) tels que, pendant un diagnostic, le registre (20) acceptera des données pour une écriture dans celui-ci en réponse à un signal de validation d'écriture en mémoire, et lira des données dans celui-ci en réponse à un signal de sélection de mémoire.

4. Processeur de données selon l'une quelconque des revendications 1 à 3, dans lequel les registres de travail (12 à 15) sont un compteur de programme (12), un registre d'indicateurs (13), un registre de données (14) et un registre d'instruction (15).

5. Processeur de données selon la revendication 4, dans lequel le circuit combinatoire (16) est une unité arithmétique ou une unité logique.

# F I G . 1
## PRIOR ART

# F I G . 2
## PRIOR ART

# F I G. 3

SDi

12 — PROGRAM COUNTER

13 — FLAG REGISTER

X BUS

16 — ARITHMETIC UNIT

MEMORY
11-1

MEMORY
11-2

Z BUS

DATA REGISTER
14

Y BUS

INSTRUCTION REGISTER
15

SDo

# F I G. 4

SYSTEM CLOCK

SCAN CLOCK

SCAN MODE

SCAN IN DATA

REGISTER SELECT SIGNAL

DATA IN

REGISTER WRITE ENABLE

REGISTER

SCAN OUT DATA

DATA OUT

TEST MODE

DATA IN

MEMORY WRITE ENABLE

MEMORY

DATA OUT

MEMORY SELECT SIGNAL

# F I G.5

```
            ┌─────────────┐
            │    START    │
            └──────┬──────┘
                   │
                   ▼
      ┌────────────────────────┐
(1)   │     SETTING OF         │
      │  THE DIAGNOSTIC MODE   │
      └───────────┬────────────┘
                  │
                  ▼
      ┌────────────────────────┐
(2)   │  SETTING OF TEST PATTERNS │
      │  BY SCAN OPERATION     │
      └───────────┬────────────┘
                  │
                  ▼
      ┌────────────────────────┐
      │    GENERATION OF       │
      │   THE SYSTEM CLOCK     │
(3)   │                        │
      │    EXECUTION OF        │
      │  THE ARITHMETIC PROCESS│
      └───────────┬────────────┘
                  │
                  ▼
      ┌────────────────────────┐
(4)   │  OUT PUT OF DIAGNOSTIC │
      │  RESULTS BY SCAN OPERATION │
      └───────────┬────────────┘
                  │
                  ▼
            ┌─────────────┐
            │    END      │
            └─────────────┘
```

4

# F I G. 6